# EUROPEAN PATENT SPECIFICATION

(11) **EP 0 666 035 B1**
(45) Date of publication and mention of the grant of the patent: **27.06.2001**
(21) Application number: 94101840.0
(22) Date of filing: 07.02.1994
(51) Int. Cl.: A23L 1/16

(54) **Preparation of fried noodles**
Herstellung von fritierten Nudeln
Préparation de nouilles frites

(43) Date of publication of application: 09.08.1995
(73) Proprietor: SOCIETE DES PRODUITS NESTLE S.A., 1800 Vevey (CH)
(72) Inventor: Greene, Robert, Blk.A,, Singapore 1128 (MY); Lim, Orlando, Block.8, Laguna (PH); Toh, Tiang Seng,, Singapore 2776 (MY)

(56) References cited:
- FR-A- 1 346 897
- US-A- 3 830 946
- US-A- 4 269 113
- US-A- 5 128 166
- PATENT ABSTRACTS OF JAPAN vol. 8, no. 7 (C-204)12 January 1984 & JP-A-58 175 462 (NITSUSHIN SHIYOKUHIN)
- DATABASE WPI Section Ch, Week 8711, 1987 Derwent Publications Ltd., London, GB; Class D11, AN 87-077431 & JP-A-54 005 052 (O.HANDA)
- C.MERCIER: 'Pasta and Extrusion Cooked Foods' 1986 , ELSEVIER , LONDON, GB Pages 33-41 * table 3 *

## Description

The present invention relates to a process for the preparation of instant fried noodles, more particularly to instant fried noodles having a lower fat content than those prepared by traditional methods.

In the traditional process for preparing instant fried noodles, wheat flour is blended with conventional noodle materials such as a mixture of alkali metal carbonates and phosphates, seasoning and water to form a dough which is kneaded, rolled into sheets and cut into strips having a typical width of 0.6 to 3.0mm. The raw noodles are then steamed to gelatinise the starch, after which they have a moisture content of about 29 to 35% by weight and afterwards fried in oil for from about 1 to 2 minutes at a temperature of from 125° to 160°C. Typically, the fried noodles contain from 17 to 23% by weight of oil and have a moisture content of from 3 to 8% by weight.

Since oil contributes to a significant part of the raw material cost, the object of the present invention is to reduce the oil uptake of the fried noodles while still retaining organoleptic properties comparable to conventional fried noodles. We have found that one method by which this can be achieved is to partially dry the noodles after steaming and before frying. In the process of the present invention, the oil uptake can be reduced by up to 35%, i.e. to an oil content of from about 11 to 15% by weight. Patent Abstracts of Japan vol. 8, no. 7 (C-204) 12 January 1984. JP-A-58175462 (NITSUSHIN SHIYOKUHIN) teaches the adjustment of the water content of noodle lines to 7-26% after steaming and before frying in oil, in which moulding may take place after drying.

According to the present invention there is provided a process for the preparation of instant fried noodles which comprises mixing wheat flour with water and other conventional noodle ingredients to form a noodle dough, sheeting the dough, cutting the dough into longitudinal strips of noodles, steaming the strips of noodles to gelatinise the starch, cutting and moulding the strips of steamed noodles into cake form, drying the moulded noodle cakes for a period of up to 10 minutes at a temperature of from 85° to 110°C to a moisture content of less than 25% by weight, and then frying the dried noodles in frying oil.

The dough is conventionally mixed for from about 5 to 30 minutes and then kneaded and rolled into a sheet. The sheet is cut into strips of conventional width, e.g. about 0.6 to 3.0mm. Steaming is carried out conventionally to substantially gelatinise the starch in the noodles. The steamed noodles are then cut into suitable lengths and moulded into conventional noodle cakes of the required shape before drying. The dimensions of the noodle cakes are chosen to give a cake which may weigh from about 25 to 100g but more usually from about 65 to 85g, e.g. 70-80g.

The moulded noodle cakes are conveniently air dried for a period of from 1 to 10 minutes, advantageously for a period of from 2 to 7.5 minutes and preferably at a temperature of from 90° to 105°C. The noodle cakes should not be overdried as oil penetration in the subsequent frying step would be too severely retarded resulting in a loss of organoleptic quality compared to conventional fried noodles.

Since the air drying step takes a minimum of one minute, if it is desired to use existing noodle lines, some modifications may have to be made to incorporate the drier between the steamer and the fryer. Conveniently, the steamed, folded noodle cakes are transported through the drier in buckets along a gondola type conveyor. The drying time may be reduced to below 1 minute by using microwave means which may more easily be incorporated in existing noodle lines.

The drying and subsequent reduction in the moisture content of the noodle cakes makes possible one or more of the following advantages:
a) reduction in oil uptake in the noodle cake,
b) reduction of the frying time, e.g. to from 70-40 seconds,
c) reduction of the frying temperature, e.g. to from 135°-125°C,
d) reduction of the size of the fryer,
e) reduction in the amount of oil required, and
f) the oil stays fresher.

Advantageously, the fat uptake can be further reduced by the following features:
1) use of flour with a high protein content, e.g. from 12-17%,
2) use of a bigger dimension, e.g. from 1.1mm to 3.0mm, which has less surface area per volume,
3) addition of wheat gluten, e.g. from 2% to 4% by weight, and
5) addition of maltodextrin, e.g. from 3% to 5% by weight.

After frying, the noodles are conveniently cooled and packaged by conventional methods.

The following example further illustrates the present invention. Parts and percentages are given by weight.

### Example.

75 parts of dry wheat flour, 1.5 parts of salt and 23.5 parts of Kan-sui ( an aqueous solution containing 1.0% by weight of potassium and sodium carbonates and phosphates) is placed in a horizontal dough mixer and mixed for 20 minutes. After mixing, the dough is reduced to a thickness of 1-2mm by passing through a series of rollers. The sheet then passes through a cutter where it is cut into strips of 1.5mm width. The strips are steamed conventionally and then cut and moulded into noodle cakes the dimensions of which are 110mm x 110mm x 25mm (weight about 75g). The moulded noodle cakes are transferred to buckets and transported on a gondola type conveyor through an air drier and dried at 100°C for 4 minutes to amoisture content of 20%. The dried noodles are conveyed to a fryer and fried at 125°C for 40 seconds. The oil content of the fried noodles was found to be 14% - instead of a typical value of 20%.

After frying, the noodles are transported to a cooling conveyor where they are cooled to ambient temperature and then to a packing machine where they are packed into cartons.

The instant fried noodles have an excellent storage stability and can be reconstituted for consumption by cooking or soaking in boiling water for 2-3 minutes.

## Claims

1. A process for the preparation of instant fried noodles which comprises mixing wheat flour with water and other conventional noodle ingredients to form a noodle dough, sheeting the dough, cutting the dough into longitudinal strips of noodles, steaming the strips of noodles to gelatinise the starch, cutting and moulding the strips of steamed noodles into cake form, drying the moulded noodle cakes for a period of up to 10 minutes at a temperature of from 85° to 110°C to a moisture content of less than 25% by weight, and then frying the dried noodles in frying oil.

2. A process according to claim 1 wherein the moulded noodle cakes are air-dried for a period of from 1 to 10 minutes and at a temperature of 90° to 105°C.

3. A process according to claim 1 wherein the moisture content of the noodle cakes is not reduced to below 15% by weight.

4. A process according to claim 1 wherein the steamed, moulded noodle cakes are dried by transporting through a drier in buckets along a gondola type conveyor.

5. A process according to claim 1 wherein the frying time is from 40-70 seconds and the frying temperature is from 125°-135°C.

6. A process according to claim 1 wherein the protein content of the wheat flour is from 12 to 17%.

7. A process according to claim 1 wherein wheat gluten or maltodextrin is added to the ingredients for mixing into the noodle dough.

## Patentansprüche

1. Verfahren zur Herstellung von fritierten Instant-Nudeln, welches umfaßt,
Mischen von Weizenmehl mit Wasser und anderen herkömmlichen Nudel- Inhaltsstoffen zur Bildung eines Nudelteigs,
Auswalzen des Teigs,
Schneiden des Teigs in längliche Nudelstreifen,
Bedampfen der Nudelstreifen zur Gelatinisierung der Stärke,
Schneiden und Formen der bedampften Nudelstreifen in Kuchenform,
Trocknen der geformten Nudel-Kuchen für eine Zeitspanne bis zu 10 min bei einer Temperatur von 85° bis 110°C bis zu einem Feuchtigkeitsgehalt von weniger als 25 Gew.-%, und dann
Fritieren der getrockneten Nudeln in Fritieröl.

2. Verfahren nach Anspruch 1, wobei die geformten Nudel-Kuchen für eine Zeitspanne von 1 bis 10 min und bei einer Temperatur von 90° bis 150°C luftgetrocknet werden.

3. Verfahren nach Anspruch 1, wobei der Feuchtigkeitsgehalt der Nudel-Kuchen auf nicht unter 15 Gew.-% reduziert wird.

4. Verfahren nach Anspruch 1, wobei die bedampften, geformten Nudel-Kuchen getrocknet werden, indem diese durch eine Trockenvorrichtung in Kübeln entlang eines Föderbands vom Gondeltyp getrocknet werden.

5. Verfahren nach Anspruch 1, wobei die Fritierdauer von 40 bis 70 Sek. beträgt die Fritiertemperatur von 125-135°C ist.

6. Verfahren nach Anspruch 1, wobei der Proteingehalt des Weizenmehls 12 bis 17% beträgt.

7. Verfahren nach Anspruch 1, wobei Weizengluten und Maltodextrin zu den Inhaltsstoffen zugesetzt wird, um diese in den Nudelteig einzumischen.

## Revendications

1. Procédé pour la préparation de nouilles frites instantanées, qui comprend les étapes consistant à mélanger de la farine de blé à de l'eau et d'autres ingrédients classiques pour la préparation de nouilles, afin de former une pâte pour la préparation de nouilles, à laminer la pâte, à découper la pâte en bandes longitudinales de nouilles, à traiter les bandes de nouilles à la vapeur d'eau pour provoquer la gélatinisation de l'amidon, à couper et mouler les bandes de nouilles traitées à la vapeur d'eau sous forme d'un gâteau, à sécher les gâteaux de nouilles moulés pendant une période de temps allant jusqu'à 10 minutes à une température de 85° à 110°C à une teneur en humidité inférieure à 25 % en poids, puis à faire frire les nouilles séchées dans de l'huile de friture.

2. Procédé suivant la revendication 1, dans lequel les gâteaux de nouilles moulés sont séchés à l'air pendant une période de temps de 1 à 10 minutes et à une température de 90° à 105°C.

3. Procédé suivant la revendication 1, dans lequel la teneur en humidité des gâteaux de nouilles n'est pas réduite à une valeur inférieure à 15 % en poids.

4. Procédé suivant la revendication 1, dans lequel les gâteaux de nouilles traités à la vapeur d'eau et moulés sont séchés par transport à travers un sécheur dans des godets le long d'un transporteur du type à nacelle.

5. Procédé suivant la revendication 1, dans lequel le temps de friture va de 40 à 70 secondes et la température de friture est comprise dans l'intervalle de 125° à 135°C.

6. Procédé suivant la revendication 1, dans lequel la teneur en protéines de la farine de blé est comprise dans l'intervalle de 12 à 17 %.

7. Procédé suivant la revendication 1, dans lequel du gluten de blé ou de la maltodextrine est ajouté aux ingrédients pour le mélange à la pâte pour la préparation de nouilles.
